## Europäisches Patentamt
## European Patent Office
## Office européen des brevets

(11) Veröffentlichungsnummer: **0 310 755 B1**

# EUROPÄISCHE PATENTSCHRIFT

(45) Veröffentlichungstag der Patentschrift: **18.12.91**

(51) Int. Cl.⁵: **B01D 25/12**

(21) Anmeldenummer: **88109589.7**

(22) Anmeldetag: **16.06.88**

(54) **Hochdruck-Filterpresse mit einer Abspritzeinrichtung.**

(30) Priorität: **01.10.87 DE 8713181 U**

(43) Veröffentlichungstag der Anmeldung:
**12.04.89 Patentblatt 89/15**

(45) Bekanntmachung des Hinweises auf die
Patenterteilung:
**18.12.91 Patentblatt 91/51**

(84) Benannte Vertragsstaaten:
**AT BE CH DE ES FR GB IT LI NL SE**

(56) Entgegenhaltungen:
**EP-A- 0 265 794**
**BE-A- 889 983**
**DE-A- 3 606 302**
**FR-A- 1 415 426**
**US-A- 4 448 221**

(73) Patentinhaber: **RITTERSHAUS & BLECHER GMBH**
**Otto-Hahn-Strasse 42**
**W-5600 Wuppertal 21(DE)**

(72) Erfinder: **Oelbermann, Max, Dipl.-Ing.**
**Moltkestrasse 19**
**W-5630 Remscheid(DE)**

(74) Vertreter: **Peerbooms, Rudolf, Dipl.-Phys.**
**Postfach 200 208 Dickmannstrasse 45c**
**W-5600 Wuppertal 2(DE)**

## Beschreibung

Die Erfindung betrifft eine Hochdruck-Filterpresse mit einer Abspritzeinrichtung für auf horizontalen Führungen verschiebbare Filterplatten, bei der die rechteckigen, z. B. quadratischen, Filterplatten mittels einer an einem Zylinderständer angeordneten hydraulischen Schließeinrichtung gegen ein Kopfstück gedrückt werden und der Zylinderständer und das Kopfstück an ihren Ecken über vier Zugholme miteinander verbunden sind.

Bei den bekannten Filterpressen sind die Filterplatten - in axialer Richtung gesehen - mittig zwischen den vier Zugholmen angeordnet und besteht die Schließeinrichtung aus einem einzigen, mittig auf das Filterplattenpaket ausgerichteten Druckzylinder, wobei durch die mittige Ausrichtung eine möglichst gleichmäßige Druckverteilung beim Schließen des Filterplattenpaketes erreicht werden soll. Es ist ferner bekannt, solche Filterpressen mit einer Abspritzeinrichtung zu versehen, wobei aber die Abmessungen der Filterpressen oft beträchtlich vergrößert werden müssen, um Raum für das zwischen die Filterplatten des geöffneten Filterplattenpaketes einzuführende Spritzrohr zu erhalten. Darüber hinaus ist bei den bekannten, einen Schließzylinder aufweisenden Filterpressen nur ein begrenzter Schließdruck erreichbar, durch den der anwendbare Filtrierdruck entsprechend begrenzt bleibt.

Der Erfindung liegt die Aufgabe zugrunde, eine Hochdruck-Filterpresse zu schaffen, die mit einer sehr hohen Schließkraft, beispielsweise von einer Million Kilopond und entsprechend hohem Filtrierdruck, betrieben werden kann, wobei die Filterpresse zugleich mit einer Abspritzeinrichtung ausgerüstet und in einer sehr kompakten Bauform herstellbar sein soll.

Zur Lösung dieser Aufgabe ist erfindungsgemäß vorgesehen, daß die Filterplatten innerhalb des von den Zugholmen umgrenzten Raumes außermittig nach oben versetzt sind und zwischen ihrem unteren Rand und den unteren Zugholmen einen Freiraum zum Vorbeifahren eines horizontalen, an vertikalen Seitenholmen der Abspritzeinrichtung auf- und abbewegbaren Spritzrohres belassen, und daß die Schließeinrichtung vier Druckzylinder aufweist, die am Zylinderständer an den Eckpunkten eines nach oben divergierenden, symmetrischen Trapezes angeordnet sind, dessen Eckpunkte zugleich auf den die vier Zugholme verbindenden Diagonalen liegen. Durch diese Maßnahme wird einerseits eine raumsparende Unterbringung der Abspritzeinrichtung an der Filterpresse und zum anderen trotz der jetzt im Mittelwert nicht mehr zentrischen Ausrichtung der Schließkräfte eine Filterpresse kompakter Bauform erreicht, die ein Arbeiten mit sehr hohen Schließdrücken und entsprechend hohen Filtrierdrücken erlaubt. Durch eine Gleichlaufsteuerung der vier Druckzylinder wird dabei zugleich eine Parallelführung des am Filterplattenpaket anliegenden, beweglichen Druckstückes und damit eine gute Druckverteilung sichergestellt. Alle auftretenden Kräfte werden innerhalb des Filterpressengestelles aufgefangen, wozu nach weiteren Merkmalen der Erfindung das Kopfstück und der Zylinderständer jeweils aus einer an ihrer Außenseite durch Paare von parallel zu den Diagonalen verlaufenden Stützrippen verstärkten Platte bestehen, so daß die durch die außermittige Versetzung zwischen der von den Druckzylindern ausgeübten Aktionskraft und der von den Zugholmen zu übertragenden Reaktionskraft bedingten Momente sicher aufgefangen werden. Die Druckzylinder sind der Erfindung zufolge jeweils zwischen Paaren paralleler Stützriopen an dem Zylinderständer angeordnet.

Zur Erzielung einer großflächigen Kräfteverteilung können die beiden oberen Druckzylinder auf die beiden oberen Ecken des Filterplattenpaketes und die beiden unteren Druckzylinder auf einen randnahen unteren Bereich der Filterplatten ausgerichtet sein. Die beiden oberen Zugholme können etwa in Höhe der unteren Flansche der als I-Träger ausgebildeten horizontalen Filterplattenführungen liegen, um so die Bauhöhe der Filterpresse zu begrenzen.

Die Abspritzeinrichtung kann in an sich bekannter Weise ein auf den oberen Flanschen der I-Träger verfahrbares, portalförmiges Gestell aufweisen, welches die I-Träger, die beiden oberen Zugholme und das Filterplattenpaket umschließt, wobei das Gestell vorteilhafterweise eine zum Überfahren des Kopfstückes und/oder Zylinderständers ausreichende lichte Weite aufweist, so daß die Abspritzeinrichtung in einfacher Weise an der Filterpresse montiert bzw. zu Wartungszwecken oder dgl. demontiert werden kann.

Zur Erzielung eines noch höheren Schließdruckes kann der Erfindung zufolge ein fünfter, mittig zwischen den vier anderen Druckzylindern angeordneter Druckzylinder vorgesehen werden. Statt des fünften Druckzylinders kann aber auch bei der Filterpresse sowohl am Kopfstück als auch an dem mit den Kolbenstangen verbundenen Druckstück jeweils eine mittige Trübezufuhr vorgesehen werden, wodurch ein besonders rasches Füllen der Filterpresse mit der Trübe ermöglicht wird.

Der Gegenstand der Erfindung wird im folgenden anhand eines in der Zeichnung dargestellten Ausführungsbeispieles beschrieben. In der Zeichnung zeigen:

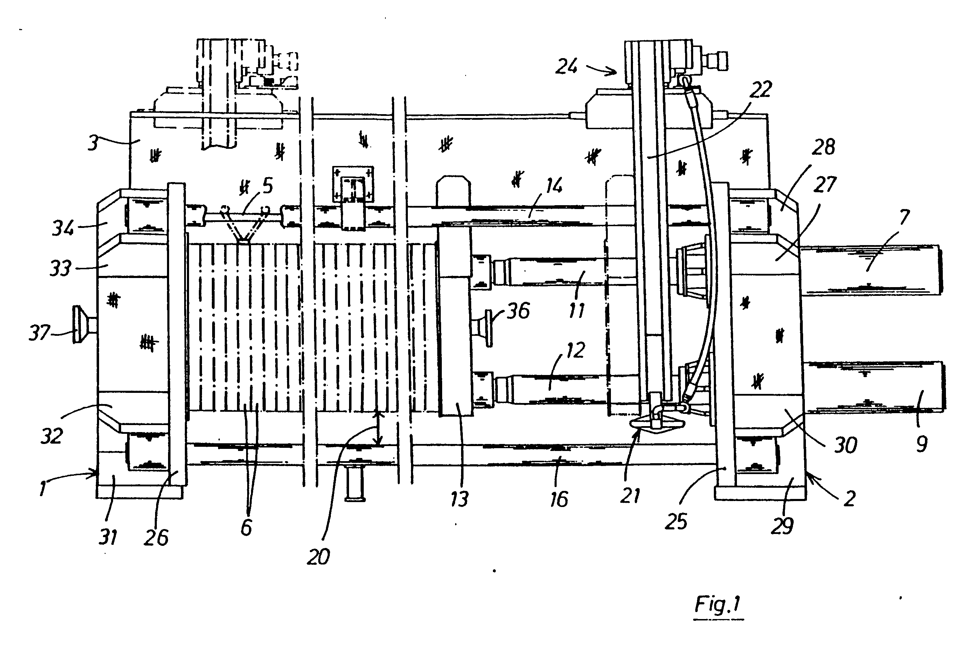

Fig. 1    eine Seitenansicht auf eine Filterpresse nach der Erfindung und

Fig. 2    eine Stirnansicht auf die Zylinderständerseite der Filterpresse nach Fig. 1.

Die Filterpresse besteht in ihrem grundsätzlichen Aufbau aus einem als Ständer ausgebildeten Kopfstück 1, einem Zylinderständer 2, aus zwei auf Kopfstück 1 und Zylinderständer 2 abgestützten I-Trägern 3, 4 und aus einem Paket von an den unteren Flanschen 5 der Träger 3, 4 verfahrbar aufgehängten Filterplatten 6. Der Zylinderständer 2 trägt vier Druckzylinder 7, 8, 9, 10, deren Kolbenstangen 11, 12 mit an einem ebenfalls auf den Flanschen 5 verfahrbaren Druckstück 13 verbunden sind. Das Kopfstück 1 und der Zylinderständer 2 sind an ihren Ecken über Zugholme 14, 15, 16, 17 verbunden, die an den Ecken eines hochkant stehenden Rechteckes angeordnet sind. Die beiden oberen Zugholme 14, 15 liegen etwa in Höhe der unteren Flansche 5 der I-Träger 3, 4.

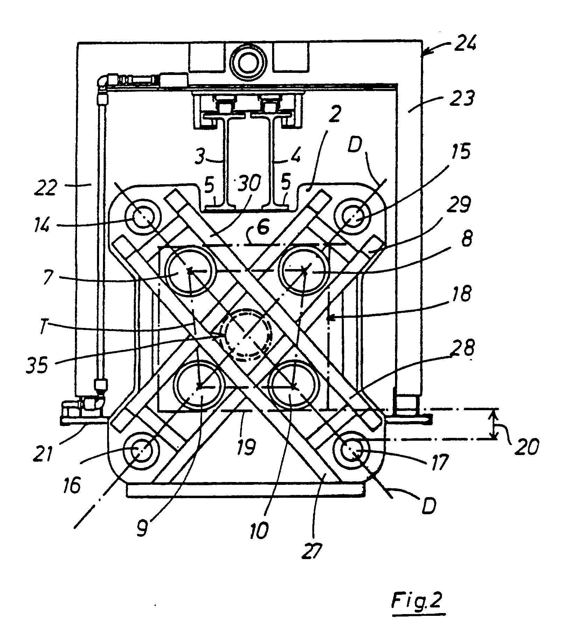

Das Paket 18 der beim Ausführungsbeispiel quadratischen Filterplatten 6 ist innerhalb des von den Zugholmen 14, 15, 16, 17 umgrenzten Raumes außermittig nach oben versetzt (vgl. Fig. 2), und zwischen dem unteren Rand 19 der Platten und den unteren Zugholmen 16, 17 ist ein Freiraum 20 zum Vorbeifahren eines horizontalen Spritzrohres 21 vorgesehen, das an Seitenholmen 22, 23 einer insgesamt etwa portalförmigen Abspritzeinrichtung 24 auf- und abbewegbar ist. Die Abspritzeinrichtung 24 weist eine zum Überfahren des Zylinderständers 2 bzw. auch des Kopfständers 1 ausreichende lichte Weite auf.

Wie aus Fig. 2 ersichtlich ist, sind die vier Druckzylinder 7, 8, 9, 10 an den Ecken eines symmetrischen, nach oben divergierenden Trapezes T angeordnet, wobei die beiden oberen Druckzylinder 7, 8 jeweils auf die oberen Eckbereiche des Filterplattenpaketes 18 ausgerichtet sind, während die beiden unteren Druckzylinder 9, 10 etwas zur Mitte hin versetzt und auf einen randnahen unteren Bereich der Filterplatten ausgerichtet sind. Die Anordnung der Druckzylinder 7, 8, 9, 10 ist zugleich so getroffen, daß ihre Mittelachsen auf den beiden, die Zugholme 14, 17 bzw. 15, 16 verbindenden Diagonalen D liegen.

Das Kopfstück 1 und der Zylinderständer 2 bestehen jeweils aus einer Platte 25, 26, die an ihrer Außenseite jeweils durch Paare von parallel zu den Diagonalen D verlaufende Stützrippen 27 bis 34 verstärkt sind, wobei die Druckzylinder 7 bis 10 jeweils zwischen den Paaren paralleler Stützrippen 27 bis 30 angeordnet sind.

Wie in Fig. 2 in strichpunktierten Linien dargestellt ist, kann die Filterpresse auch mit einem fünften Druckzylinder 35 ausgerüstet werden, der mittig zwischen den vier anderen Druckzylindern 7, 8, 9, 10 angeordnet ist. Alternativ kann statt eines fünften Druckzylinders am Druckstück 13 mittig eine Trübezufuhr 36 vorgesehen werden, so daß die Filterkammern zusätzlich zu der am Kopfstück 1 mittig vorgesehenen Trübezufuhr 37 auch von der Seite des Druckstückes 13 her mit Trübe beschickt werden kann.

## Patentansprüche

1. Hochdruck-Filterpresse mit einer Abspritzeinrichtung (24) für auf horizontalen Führungen verschiebbare Filterplatten (6), bei der die rechteckigen, z.B. quadratischen, Filterplatten mittels einer an einem Zylinderständer (2) angeordneten hydraulischen Schließeinrichtung gegen ein Kopfstück (1) gedrückt werden und der Zylinderständer und das Kopfstück an ihren Ecken über vier Zugholme (14-17) miteinander verbunden sind, dadurch gekennzeichnet, daß die Filterplatten (6) innerhalb des von den Zugholmen (14,15,16,17) umgrenzten Raumes außermittig nach oben versetzt sind und zwischen ihrem unteren Rand (19) und den unteren Zugholmen (16, 17) einen Freiraum (20) zum Vorbeifahren eines horizontalen, an vertikalen Seitenholmen (22, 23) der Abspritzeinrichtung (24) auf- und abbewegbaren Spritzrohres (21) belassen, und daß die Schließeinrichtung vier Druckzylinder (7, 8, 9, 10) aufweist, die am Zylinderständer (2) an den Eckpunkten eines nach oben hin divergierenden, symmetrischen Trapezes (T) angeordnet sind, dessen Eckpunkte zugleich auf den die vier Zugholme (14, 17 bzw. 15, 16) verbindenden Diagonalen (D) liegen.

2. Filterpresse nach Anspruch 1, dadurch gekennzeichnet, daß das Kopfstück (1) und der Zylinderständer (2) aus an ihrer Außenseite jeweils durch Paare von parallel zu den Diagonalen (D) verlaufende Stützrippen (27 bis 34) verstärkte Platten (25, 26) bestehen und daß die Druckzylinder (7, 8, 9, 10) zwischen Paaren paralleler Stützrippen (27 bis 30) angeordnet sind.

3. Filterpresse nach den Ansprüchen 1 und 2, dadurch gekennzeichnet, daß die beiden oberen Druckzylinder (7, 8) auf die beiden oberen Ecken des Filterplattenpaketes (18) und die beiden unteren Druckzylinder (9, 10) auf einen randnahen unteren Bereich der Filterplatten (6) ausgerichtet sind.

4. Filterpresse nach den Ansprüchen 1 bis 3, dadurch gekennzeichnet, daß die beiden oberen Zugholme (14, 15) etwa in Höhe der unteren Flansche (5) der als I-Träger (3, 4) ausgebildeten horizontalen Filterplattenführungen liegen.

5. Filterpresse nach den Ansprüchen 1 bis 4, dadurch gekennzeichnet, daß die Abspritzeinrichtung (24) ein auf den oberen Flanschen der I-Träger (3, 4) verfahrbares, portalförmiges Gestell aufweist, welches die I-Träger (3, 4), die beiden oberen Zugholme (14, 15) und das Filterplattenpaket (18) umschließt, und daß das Gestell der Abspritzeinrichtung (24) eine zum Überfahren des Kopfstückes (1) und/oder Zylinderständers (2) ausreichende lichte Weite aufweist.

6. Filterpresse nach den Ansprüchen 1 bis 5, gekennzeichnet durch einen fünften, mittig zwischen den vier anderen Druckzylindern(7, 8, 9, 10)angeordneten Druckzylinder (35).

7. Filterpresse nach den Ansprüchen 1 bis 5, dadurch gekennzeichnet, daß sowohl am Kopfstück (1) als auch an dem mit den Kolbenstangen (11, 12) verbundenen Druckstück (13) jeweils ein mittiger Trübeanschluß (36, 37) vorgesehen ist.

## Claims

1. High-pressure filter press with a spraying device (24) for filter plates (6) which can be pushed along horizontal guides, in which the rectangular, for example square, filter plates are pressed against a head piece (1) by means of a hydraulic closing device located on a cylinder stand (2) and the cylinder stand and the head piece are connected to one another at their corners by four tie rods (14 - 17), characterized in that the filter plates (6) are displaced eccentrically upwards within the space bordered by the tie rods (14, 15, 16, 17) leaving a free space (20) between their edge (19) and the lower tie rods (16, 17) for the passage of a horizontal spray bar (21) which is moveable up and down vertical lateral bars (22,23) of the spraying device (24) and in that the closing device has four pressure cylinders (7,8,9,10) which at the cylinder stand (2) are arranged at the corner points of a symmetrical trapezium (T), diverging upwards, whose corner points at the same time lie on the diagonals (D) connecting the four tie rods (14, 17 and 15, 16).

2. Filter press as claimed in Claim 1, characterized in that the head piece (1) and the cylinder stand (2) consist of plates (25, 26) each reinforced on its exterior by pairs of reinforcing ribs (27 to 34) running parallel to the diagonals (D) and in that the pressure cylinders (7,8,9,10) are arranged between pairs of parallel reinforcing ribs (27 to 30).

3. Filter press as claimed in Claims 1 and 2, characterized in that the two upper pressure cylinders (7,8) are directed towards the two upper corners of the filter plate pack (18) and the two lower cylinders (9,10) are directed towards a lower area of the filter plates (6) near the edge.

4. Filter press as claimed in Claims 1 to 3, characterized in that the two upper tie rods (14, 15) lie roughly at the height of the lower flange (5) of the horizontal filter plate guides formed as I-beams (3, 4).

5. Filter press as claimed in Claims 1 to 4, characterized in that the spraying device (24) has a gantry-shaped stand, moveable along the upper flanges of the I-beams (3, 4) and surrounding the I-beams (3, 4), the two upper tie rods (14, 15) and the filter plate pack (18), and in that the frame of the spraying device (24) has a clearance sufficient to clear the head piece (1) and/or the cylinder stand (2).

6. Filter press as claimed in Claims 1 to 5, characterized by a fifth pressure cylinder (35) arranged centrally between the other four pressure cylinders (7, 8, 9 , 10).

7. Filter press as claimed in Claims 1 to 5m characterized in that both on the head piece (1) and on the pressure piece (13) connected to the piston rods (11, 12) a central sludge connection (36, 37) is provided.

## Revendications

1. Filtre-presse à haute pression comportant un dispositif de nettoyage au jet (24) pour le nettoyage de plaques filtrantes (6) mobiles sur des guides horizontaux, dans lequel les plaques filtrantes, rectangulaires, en particulier carrées, sont serrées contre une pièce de tête au moyen d'un dispositif hydraulique de fermeture monté sur un montant de vérin (2) et ce montant de vérin et la pièce de tête sont réunis à leurs coins par quatre tirants (14 à 17), caractérisé par le fait que les plaques filtrantes (6) sont excentrées vers le haut dans l'espace délimité par les tirants (14, 15, 16, 17), et entre leur bord inférieur (19) et les tirants inférieurs (16, 17) est laissé un espace libre (20) pour le passage d'un tuyau horizontal d'arrosage (21) pouvant monter et descendre sur des barres latérales (22,23) du dispositif de nettoyage au jet (24), et que le dispositif de fermeture présente quatre vérins de poussée (7, 8 , 9,10) qui sont montés sur le montant de vérin (2) aux sommets d'un trapèze symétrique divergeant vers le haut (T), ses sommets étant sur les diagonales (D) joignant les quatre tirants (14, 17, 15, 16).

2. Filtre-presse selon la revendication 1, caractérisé par le fait que la pièce de tête (1) et le montant de vérin (2) sont constitués de plaques (15, 26) renforcées sur leur face extérieure par des paires de nervures support (27 à 34) parallèles aux diagonales (D), et que les vérins de poussée (7, 8, 9, 10) sont placés entre des paires de nervures support parallèles (27 à 30).

3. Filtre-presse selon les revendications 1 et 2, caractérisé par le fait que les deux vérins de poussée supérieurs (7,8) sont alignés sur les deux coins supérieurs du paquet de plaques filtrantes (18) et les deux vérins de poussée inférieurs (9, 10) alignés sur une zone inférieure des plaques filtrantes (6) voisine du bord.

4. Filtre-presse selon les revendications 1 à 3, caractérisé par le fait que les deux tirants supérieurs (14, 15) sont situés à peu près à la hauteur des ailes inférieures (5) des guides horizontaux, constitués de poutrelles en double T (3, 4), des plaques filtrantes.

5. Filtre-presse selon les revendications 1 à 4, caractérisé par le fait que le dispositif de nettoyage au jet (24) présente un bâti en forme de portique mobile sur les ailes supérieures des poutrelles en double T (3, 4) qui entoure ces poutrelles en double T (3, 4), les deux tirants supérieurs (14, 15) et le paquet de plaques filtrantes (18), et que ce bâti a une largeur intérieure suffisante pour franchir la pièce de tête (1) et/ou le montant de vérin (2).

6. Filtre-presse selon les revendications 1 à 5, caractérisé par un cinquième vérin de poussée (35) placé au milieu entre les quatre autres (7, 8, 9, 10).

7. Filtre-presse selon les revendications 1 à 5, caractérisé par le fait que sur la pièce de tête (1) et sur la pièce de pression (13) jointe aux tiges de pistons (11, 12) est prévu un raccord central de boue (36, 37).

Fig.1

EP 0 310 755 B1

*Fig.2*